# EUROPÄISCHE PATENTSCHRIFT

(11) **EP 2 495 622 B1**
(45) Veröffentlichungstag und Bekanntmachung des Hinweises auf die Patenterteilung: **07.06.2017**
(21) Anmeldenummer: 11156805.1
(22) Anmeldetag: 03.03.2011
(51) Int. Cl.: G05B 19/042, G05B 17/02

(54) **Verfahren zum Betrieb eines Automatisierungssystems, Computerprogramm zur Implementierung des Verfahrens und Computersystem mit einem solchen Computerprogramm**
Method for operating an automation system, computer program for implementing the method and computer system with such a computer program
Procédé de commande d'un système d'automatisation, programme informatique pour l'implantation du procédé et système informatique doté d'un tel programme informatique

(43) Veröffentlichungstag der Anmeldung: 05.09.2012
(73) Patentinhaber: Siemens Aktiengesellschaft, 80333 München (DE)
(72) Erfinder: Pohlan, Rudolf, 76337, Waldbronn (DE)

(56) Entgegenhaltungen:
- EP-A1- 1 703 350
- DE-A1-102007 047 421

## Beschreibung

Die Erfindung betrifft ein Verfahren zum Betrieb eines Automatisierungssystems mit einer Mehrzahl von Automatisierungsgeräten und einer Mehrzahl von auf den Automatisierungsgeräten ablaufenden Automatisierungsprogrammen. Das Automatisierungssystem und die Automatisierungsprogramme sind zur Steuerung und/oder Überwachung eines technischen Prozesses vorgesehen. Solche Automatisierungssysteme und Automatisierungsprogramme sind an sich bekannt.

Der Begriff "Automatisierungsgerät" umfasst sämtliche Geräte, Einrichtungen oder Systeme, also neben z. B. Steuerungen, wie speicherprogrammierbaren Steuerungen, Prozessrechnern, (Industrie-)Computern, Bedien- und Beobachtungsgeräten (HMI-Geräten), Programmiergeräten und dergleichen, auch Antriebssteuerungen, Frequenzumrichter und Ähnliches, wie sie zur Steuerung, Regelung und/oder Überwachung technologischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Die EP 1 703 350 A beschreibt ein Diagnosemodell für ein Automatisierungssystem, bei dem Automatisierungskomponenten durch Modelknoten repräsentiert werden. Funktionale und/oder physikalische Beziehungen zwischen den Automatisierungskomponenten werden durch Verknüpfungen der entsprechenden Modellknoten innerhalb des Diagnosemodells abgebildet. Jeder Modellknoten enthält eine Statusinformation, in der der Status der zugehörigen Automatisierungskomponente abgelegt ist. Durch Auswertung der Statusinformationen kann mit Hilfe des Diagnosemodells der Zustand des Automatisierungssystems untersucht und überwacht werden.

Nachteilig bei bekannten Automatisierungssystemen und Mitteln für deren Wartung und Programmierung ist allerdings häufig, dass z. B. an sich bekannte, so genannte Bedien- und Beobachtungssysteme (HMI-Systeme) üblicherweise nur Zugriff auf einen eingeschränkten Bereich der von den Automatisierungsgeräten be- oder verarbeiteten Steuer- und Prozessvariablen haben, nämlich nur die für den jeweiligen Anlagenfahrer (Operator, also Bedienpersonal des Betreibers des jeweiligen technischen Prozesses) relevanten Bediendaten. Bei Ausfall, Fehlen oder Überlastung solcher Automatisierungssysteme sind aber weitere Diagnosehilfsmittel hilfreich, insbesondere wenn sich damit ein vollständiger oder zumindest nahezu vollständiger Zugriff auf technologieorientierte Anlagenbeschreibungsdaten erreichen lässt.

Als technologieorientierte Anlagenbeschreibungsdaten werden hier und im Folgenden solche Daten aufgefasst, die eine hierarchische Beschreibung der Anlage und deren Ausrüstung, also des technischen Prozesses und ggf. auch der zur Steuerung und/oder Überwachung vorgesehenen Automatisierungsgeräte, ermöglichen. Zur Anlage, nämlich zum technischen Prozess, gehören z. B. Einrichtungen, wie Dosiereinrichtungen, Transporteinrichtungen und dergleichen, und die an der Anlage, also im technischen Prozess, vorgesehene Aktorik und Sensorik, insbesondere Messstellen und die davon gelieferten Prozessdaten, und daneben auch Ablaufsteuerungen sowie Signalflüsse und Prozessflüsse.

Solche technologieorientierten Anlagenbeschreibungsdaten sind unabhängig von den zur Steuerung des jeweiligen technischen Prozesses vorgesehenen Automatisierungsgeräten und deshalb heute auch nur auf so genannten Engineeringstationen oder seltener auf speziellen Wartungs- und Diagnosesystemen verfügbar.

Eine Aufgabe der Erfindung besteht entsprechend darin, zur Überwachung, Wartung und/oder Inbetriebnahme eines Automatisierungssystems und/oder des jeweiligen technischen Prozesses ein Verfahren anzugeben, das zusätzliche Daten zur Verfügung stellt, so dass sich ein Benutzer des Verfahrens auch ohne Programmierkenntnisse schnell einen Zugang zu dem Automatisierungssystem oder dem jeweiligen technischen Prozess erschließen kann.

Diese Aufgabe wird erfindungsgemäß mit den Merkmalen des Anspruchs 1 gelöst. Dazu ist bei einem Verfahren der eingangs genannten Art vorgesehen, dass als zusätzliche Daten technologieorientierte Anlagenbeschreibungsdaten unabhängig von den Automatisierungsprogrammen im Automatisierungssystem gespeichert werden, dass die Anlagenbeschreibungsdaten in einem Objektbaum mit Knoten und Kanten organisiert sind, dass die Anlagenbeschreibungsdaten Referenzen zu Programmdaten in einzelnen Automatisierungsprogrammen umfassen und dass Knoten des Objektbaums mit Referenzen zu Programmdaten auf oder zumindest auch auf demjenigen Automatisierungsgerät gespeichert werden, das die jeweiligen Programmdaten bereitstellt. Die von den Automatisierungsprogrammen unabhängige Speicherung der Anlagenbeschreibungsdaten im Automatisierungssystem erfolgt dabei bei komplexeren Automatisierungssystemen mit einer Mehrzahl von Automatisierungsgeräten in verteilter Form, derart, dass Knoten des Objektbaums mit Referenzen zu Programmdaten auf oder zumindest auch auf demjenigen Automatisierungsgerät gespeichert werden, das die jeweiligen Programmdaten bereitstellt, und damit systembedingt auf unterschiedlichen Automatisierungsgeräten, also verteilt.

Der Vorteil der Erfindung besteht darin, dass durch die von den Automatisierungsprogrammen unabhängige Speicherung der technologieorientierten Anlagenbeschreibungsdaten im Automatisierungssystem bisherige Konzepte unverändert beibehalten werden können, insbesondere also keine Programmänderungen an bestehenden Automatisierungsprogrammen oder Änderungen an der Konfiguration des Automatisierungssystems notwendig sind, also alle bisherigen Automatisierungsgeräte unverändert weiter benutzt werden können. Dadurch, dass die Anlagenbeschreibungsdaten in einem Objektbaum mit Knoten und Kanten organisiert sind, ergibt sich eine Möglichkeit zur hierarchischen Strukturierung der Anlagenbeschreibungsdaten. Die eigentlichen Anlagenbeschreibungsdaten werden dabei den Knoten des Objektbaums zugeordnet, wobei eine Lage des Knotens im Objektbaum, speziell eine Lage des Knotens im Objektbaum im Verhältnis zu anderen Knoten im selben Objektbaum, eine hierarchische und technologische Position der von dem jeweiligen Knoten umfassten oder dem Knoten zugeordneten Daten kodiert. Dadurch, dass die Anlagenbeschreibungsdaten Referenzen zu Programmdaten in einzelnen Automatisierungsprogrammen umfassen, ist über die Anlagenbeschreibungsdaten, die auf einer oberen Hierarchieebene z. B. eher den technischen Prozess mit den davon umfassten Einrichtungen, z. B. Dosiereinrichtungen und Transporteinrichtungen, beschreiben, auch ein Zugriff auf das Automatisierungssystem möglich, so dass als Anlagenbeschreibungsdaten z. B. auch Prozesszustände in Betracht kommen und im Einzelfall ein jeweils aktueller Wert für einen solchen Prozesszustand zugreifbar ist. Dadurch, dass Knoten des Objektbaums mit Referenzen zu Programmdaten auf demjenigen Automatisierungsgerät gespeichert werden, das die jeweiligen Programmdaten bereitstellt, werden genau diejenigen Knoten des technologieorientierten Objektbaums auf einem Automatisierungsgerät gespeichert, die mit den dort gespeicherten Automatisierungsprogrammen und Programmdaten aufgrund der durch Referenzen ausgedrückten Zuordnung korrespondieren. Wenn hier von einer Speicherung von Knoten des technologieorientierten Objektbaums auf demjenigen Automatisierungsgerät die Rede ist, das die jeweils in Bezug genommenen Programmdaten bereitstellt, meint dies eine Speicherung zumindest auf diesem Automatisierungsgerät; d. h., der Knoten kann evtl. auch oder z. B. auch in verteilter Form auf anderen Automatisierungsgeräten gespeichert sein, wenn auch auf anderen Automatisierungsgeräten Programmdaten oder dergleichen in Bezug genommen werden.

Insgesamt schlägt der Ansatz gemäß der Erfindung einen von der herkömmlichen Programmiersicht unabhängigen Zugriff auf das Automatisierungssystem vor. Der Zugriff wird für den Nutzer des Verfahrens leichter möglich, weil die dafür vorgesehenen Anlagenbeschreibungsdaten technologieorientiert organisiert sind. Die Begriffe technologieorientierte Anlagenbeschreibung oder hierarchische Anlagenbeschreibung oder hierarchischer Objektbaum oder technologieorientierter Objektbaum sind damit synonyme Bezeichnungen.

Die Baumknoten der Anlagenbeschreibungsdaten sind zwar verteilt auf den Automatisierungsgeräten des Automatisierungssystems gespeichert, sie bilden aber gleichsam einen virtuellen, hierarchisch organisierten "Bedien- und Diagnosebus", weil die einzelnen Baumknoten über die Kanten des Objektbaums vernetzt sind, so dass sich ausgehend von einem Knoten mit einer Zuordnung zu zumindest einem Automatisierungsgerät stets auch Nachbarknoten mit einer Zuordnung zu evtl. dem gleichen Automatisierungsgerät, ggf. aber auch zu anderen Automatisierungsgeräten erreichen lassen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die Anlagenbeschreibungsdaten als Referenzen zu Programmdaten in einzelnen Automatisierungsprogrammen entweder Adressinformationen oder im jeweiligen Automatisierungsprogramm verwendete symbolische Bezeichner umfassen, ist ein direkter oder zumindest indirekter Zugriff auf die Programmdaten des jeweiligen Automatisierungsprogramms möglich. Mit Adressinformationen kann direkt eine Speicherstelle eines Datums im Automatisierungsprogramm bezeichnet werden, das auch als Anlagenbeschreibungsdatum in Bezug genommen werden soll, z. B. eine Zustandsinformation aus dem technischen Prozess, etwa ob der technische Prozess momentan im Automatikbetrieb, im Handbetrieb, im Einrichtbetrieb oder dergleichen läuft oder ob der technische Prozess momentan inaktiv ist. Wenn die Anlagenbeschreibungsdaten im jeweiligen Automatisierungsprogramm verwendete symbolische Bezeichner umfassen, ist in an sich bekannter Art und Weise eine Umsetzung solcher symbolischen Bezeichner in Adressinformationen möglich, z. B. durch Zugriff auf so genannte Kreuzreferenztabellen, die zu diesem Zweck im Automatisierungssystem vorgehalten werden müssen, optimalerweise auf demjenigen Automatisierungsgerät, auf dem sich der referenzierende Baumknoten und das in Bezug genommene Automatisierungsprogramm befinden.

Üblicherweise umfasst der technologieorientierte Objektbaum eine Mehrzahl von Knoten. Ein trivialer Objektbaum ist ein Objektbaum mit nur einem Knoten. Bei einer Mehrzahl von Knoten im Objektbaum umfasst jeder Knoten zumindest eine Referenz zu einem weiteren Knoten im selben Objektbaum. Eine solche Referenz wird, wie bei baumorientierten Datenstrukturen üblich, hier und im Folgenden als Kante bezeichnet. Dadurch, dass jeder Knoten bei einer Ausführungsform des Verfahrens Referenzen zu benachbarten Knoten des Objektbaums umfasst, ist ausgehend von jedem Knoten des Objektbaums ein Erreichen aller anderen Knoten desselben Objektbaums möglich. Andere Knoten sind dabei entweder unmittelbar erreichbar, indem der jeweils andere Knoten mit einem zunächst in Zugriff genommenen Knoten unmittelbar über eine Kante verbunden ist, oder mittelbar erreichbar, indem der zu erreichende Knoten mit den zunächst in Zugriff genommenen Knoten über zwischen beiden Knoten liegende andere Knoten erreichbar ist. Ausgehend von einem beliebigen Baumknoten des hierarchischen Objektbaums kann also jeder andere Baumknoten erreicht werden.

Bei einer Ausführungsform des Verfahrens für ein Automatisierungssystem mit Automatisierungsgeräten, die in einem verteilten Automatisierungssystem über einen physikalischen Bus kommunikativ verbunden sind, ist vorgesehen, dass sich ausgehend von einem ersten Automatisierungsgerät als Speicherort eines referenzierenden Knotens, also eines Knotens, der über eine von diesem ausgehende Kante mit einem weiteren Knoten des Objektbaums verknüpft ist, die Referenzen auch auf mit diesem ersten Automatisierungsgerät nur über den Bus verbundene Automatisierungsgeräte und dortige Knoten des Objektbaums beziehen. Ausgehend von einem beliebigen Automatisierungsgerät können also Fragmente der Anlagenbeschreibung über eine Mehrzahl beteiligter Automatisierungsgeräte, die über einen physikalischen Anlagenbus vernetzt sind, gesammelt und wieder zu einer technologieorientierten Anlagenbeschreibung zusammengesetzt werden.

Wenn sichergestellt ist, dass ausgehend von einem Zugriff auf einen beliebigen Knoten des Objektbaums alle weiteren Knoten des Objektbaums unmittelbar oder zumindest mittelbar erreichbar sind, wenn es sich also bei der dem technologieorientierten Objektbaum zugrunde liegenden Datenstruktur zumindest um einen einfachen Graphen handelt, können ausgehend von einem beliebigen Automatisierungsgerät sämtliche Fragmente der Anlagenbeschreibung über alle beteiligten Automatisierungsgeräte gesammelt und wieder zu einer vollständigen technologieorientierten Anlagenbeschreibung zusammengestellt werden. Wenn es sich bei der dem Objektbau zugrunde liegenden Datenstruktur um einen so genannten vollständigen Graphen handelt, wenn also alle Knoten direkt miteinander über jeweils eine Kante verbunden sind, ergeben sich kurze Wege in dem Objektbaum. Je nach Komplexität des Automatisierungssystems kann der Objektbaum auch nur teilweise ein vollständiger Graph sein, etwa derart, dass zwischen Baumknoten, die auf vergleichsweise leistungsfähigen Automatisierungsgeräten gespeichert sind, etwa speicherprogrammierbaren Steuerungen, Prozessrechnern, Leitstationen usw., ein vollständiger Graph aufgespannt ist, während ausgehend von solchen Automatisierungsgeräten sich Teile eines einfachen Graphen bis zu z. B. dezentralen Peripheriegeräten oder dergleichen als Beispiel für weniger leistungsfähige Automatisierungsgeräte erstrecken.

Eine Ausführungsform des Verfahrens zeichnet sich entsprechend dadurch aus, dass ausgehend von einem Zugriff auf einen beliebigen Knoten des Objektbaums durch automatisches Traversieren des Objektbaums automatisch eine teilweise oder vollständige, technologieorientierte Anlagenbeschreibung des Automatisierungssystems, also zumindest des jeweiligen technischen Prozesses und ggf. der jeweiligen Automatisierungslösung, generiert wird. Ein Nutzer des Verfahrens hat bei dieser Ausführungsform nicht nur die Möglichkeit, die Anlagendaten, die durch den jeweils in Zugriff genommenen Baumknoten kodiert sind, zu betrachten oder ggf. zu verändern, sondern es wird automatisch der komplette Objektbaum abgearbeitet (Traversieren). Indem ausgehend von einem zunächst in Zugriff genommenen Knoten alle anderen Knoten besucht werden, die dort kodierten technologieorientierten Anlagenbeschreibungsdaten gesammelt werden und auf Basis dieser Datensammlung sodann automatisch eine Anlagenbeschreibung des Automatisierungssystems generiert wird, besteht nicht nur der Zugriff auf die Daten des jeweiligen Baumknotens, sondern auch auf die Daten aller anderen besuchten Baumknoten, so dass sich für den Bediener ein technologischer und/oder hierarchischer Zusammenhang leichter erschließt.

Die generierte Anlagenbeschreibung kann dabei eine teilweise Anlagenbeschreibung oder eine vollständige Anlagenbeschreibung sein, etwa indem bei einem technischen Prozess mit einer Dosiereinrichtung und einer Transporteinrichtung als teilweise Anlagenbeschreibung nur Daten z. B. für die Dosiereinrichtung zusammengestellt werden. Die Anlagenbeschreibung ist im oben erwähnten Szenario eine vollständige Anlagenbeschreibung, wenn die gesammelten Daten Daten für die Dosiereinrichtung und für die Transporteinrichtung umfassen. Durch die technologieorientierte hierarchische Organisation ist dabei wieder eine Trennung und damit eine Übersichtlichkeit der Daten erreicht, indem zur Dosiereinrichtung gehörige Daten nur bei Auswahl eines Zugriffs auf die Dosiereinrichtung zur Verfügung stehen usw.

Wenn die teilweise oder vollständige Anlagenbeschreibung des Automatisierungssystems mit einem Bedien- und Beobachtungsprogramm abgerufen oder diesem zur Verfügung gestellt wird und mit dem Bedien- und Beobachtungsprogramm ein Zugriff auf einzelne Anlagenbeschreibungsdaten erfolgt, ist eine komfortable und gleichzeitig leistungsfähige Möglichkeit zum Zugriff auf die technologieorientierte Anlagenbeschreibung gegeben. Das Bedien- und Beobachtungsprogramm zum Zugriff auf die Anlagenbeschreibungsdaten kann sich hinsichtlich seiner Bedienung an die in diesem Technologiefeld üblichen Standards anlehnen, so dass sich ein Nutzer des Verfahrens schnell in die Bedienung dieses Bedien- und Beobachtungsprogramms einarbeiten kann. Ein Abrufen der teilweisen oder vollständigen Anlagenbeschreibung des Automatisierungssystems mit einem solchen Bedien- und Beobachtungsprogramm meint hier z. B., dass das Bedien- und Beobachtungsprogramm auf einen beliebigen ersten Baumknoten des hierarchischen Objektbaums zugreift und danach entlang von Kanten ausgehend von diesem Baumknoten und sukzessive entlang von von weiteren Baumknoten ausgehenden Kanten andere Baumknoten des Objektbaums erreicht, um damit die teilweise oder vollständige Anlagenbeschreibung zu erhalten. Eine zusätzliche oder alternative Möglichkeit besteht darin, dass dem Bedien- und Beobachtungsprogramm eine solche Anlagenbeschreibung zur Verfügung gestellt wird. Zur Verfügung stellen meint hier, dass z. B. nach einem vorangehenden Zugriff auf den Objektbaum mit einem Bedien- und Beobachtungsprogramm auf einem Automatisierungsgerät, auf dem sich der zunächst in Zugriff genommene Baumknoten befindet, oder auf dem Bedien- und Beobachtungsgerät die teilweise oder vollständige Anlagenbeschreibung für eine spätere Nutzung zumindest temporär vorgehalten wird. Wenn also beim nochmaligen Zugriff festgestellt wird, dass neben dem eigentlich in Zugriff genommenen Baumknoten bereits eine teilweise oder vollständige Anlagenbeschreibung vorliegt, kann diese dem Bedien- und Beobachtungsprogramm zur Verfügung gestellt werden. Zusätzlich ist ebenfalls denkbar, dass nicht das Bedien- und Beobachtungsprogramm die Zusammenstellung der teilweisen oder vollständigen Anlagenbeschreibung bewirkt, sondern dass das Bedien- und Beobachtungsprogramm eine diesbezügliche Funktionalität auf dem jeweiligen Automatisierungsgerät aufruft und dass danach das Automatisierungsgerät die Anlagenbeschreibung anhand der Anlagenbeschreibungsdaten des zunächst in Zugriff genommenen Baumknotens und weiterer auf dem gleichen Automatisierungsgerät durch von diesem Knoten ausgehende Kanten referenzierte Baumknoten zusammenstellt und danach, sobald über eine Kante ein Baumknoten auf einem anderen Automatisierungsgerät referenziert wird, eine Funktionalität zum Zusammenstellen der Anlagenbeschreibungsdaten auch auf diesem entfernten Automatisierungsgerät bzw. entfernten Automatisierungsgeräten aktiviert wird, so dass sich nach vollständiger Abarbeitung der aufgerufenen Funktionalität die Anlagenbeschreibung ergibt und dem Bedien- und Beobachtungsprogramm nur noch die Verfügbarkeit der Anlagenbeschreibung signalisiert werden muss.

Die oben genannte Aufgabe wird damit auch mit einem Bedien- und Beobachtungsprogramm der soeben und nachfolgend noch mit weiteren Details beschriebenen Art gelöst. Die oben genannte Aufgabe wird ebenfalls mit einem Computerprogramm zur Implementierung des Verfahrens und seiner Voraussetzungen gelöst, also einem Computerprogramm, das in dem Automatisierungssystem den technologieorientierten Objektbaum als technologieorientierte Anlagenbeschreibung generiert. Die Erfindung ist hinsichtlich dieses Aspekts also insbesondere in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Automatisierungsgerät oder dergleichen, also z. B. ein Prozessrechner mit Ein- und Ausgabemöglichkeit, ein Programmiergerät oder ein HMI-Gerät, usw., in dessen Speicher als Mittel zur Durchführung des Verfahrens oder seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen:
- FIG 1: ein Automatisierungssystem mit einer Mehrzahl von Automatisierungsgeräten und einer Anlage für einen technischen Prozess,
- FIG 2: eine schematisch vereinfachte Darstellung eines Automatisierungsgerätes,
- FIG 3: eine schematisch vereinfachte Darstellung einer hinsichtlich des technischen Prozesses hierarchischen Struktur der Automatisierungsgeräte in dem Automatisierungssystem,
- FIG 4: eine schematisch vereinfachte Darstellung einer ebenfalls hierarchischen Struktur von den einzelnen Automatisierungsgeräten zugeordneten technologischen Anlagenbeschreibungsdaten,
- FIG 5: einen sich aufgrund der hierarchischen Struktur der Anlagenbeschreibungsdaten ergebenden, die Anlagenbeschreibungsdaten umfassenden hierarchischen Objektbaum,
- FIG 6: eine graphische Veranschaulichung von von den Anlagenbeschreibungsdaten umfassten Referenzen zu Programmdaten in einem von einem Automatisierungsgerät ausgeführten Automatisierungsprogramm,
- FIG 7: eine weitere Darstellung des hierarchischen Objektbaums mit zusätzlichen Details und
- FIG 8: eine schematisch vereinfachte Darstellung eines Bedien- und Beobachtungsgeräts mit einem Bedien- und Beobachtungsprogramm als Beispiel für ein Computer-programm zum Zugriff auf die hierarchisch strukturierten, technologischen Anlagenbeschreibungsdaten.

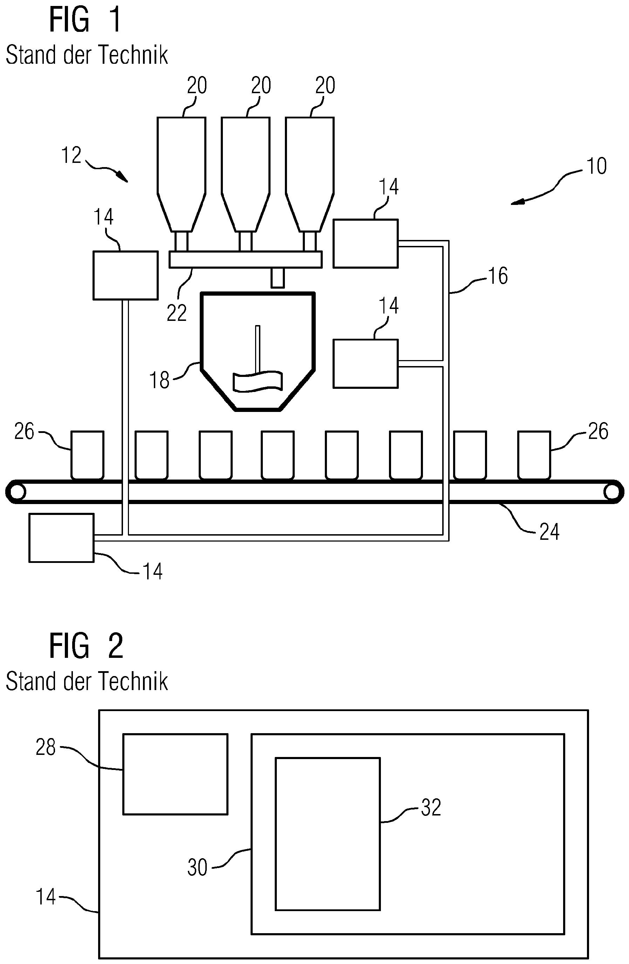

FIG 1 zeigt schematisch vereinfacht ein Automatisierungssystem 10. Zu diesem gehören ein gesteuerter und/oder überwachter technischer Prozess 12 sowie zumindest ein Automatisierungsgerät 14 gemäß der eingangs erläuterten Definition, also z. B. speicherprogrammierbare Steuerungen und/oder dezentrale Peripheriegeräte. Dargestellt ist eine Situation mit vier Automatisierungsgeräten 14, die einzelnen Funktionseinheiten des technischen Prozesses 12 zugeordnet sind. Die Automatisierungsgeräte 14 sind dafür in an sich bekannter Art und Weise über einen Bus, z. B. einen so genannten Feldbus 16, kommunikativ verknüpft.

Ein Beispiel für ein Automatisierungsgerät 14 ist eine so genannte speicherprogrammierbare Steuerung. Wesentliche Bestandteile eines solchen Automatisierungsgerätes 14 sind Baugruppen für zentrale Aufgaben (CPU-Einheiten) sowie Signal-, Funktions- und Kommunikationsbaugruppen. Die CPU-Einheit der speicherprogrammierbaren Steuerung arbeitet während des Steuerbetriebs zyklisch ein Automatisierungsprogramm ab, welches ein Programmierer mit einem mit einem Software-Werkzeug versehenen Programmiergerät erstellt und welches zur Lösung einer Automatisierungsaufgabe vorgesehen ist. Während der zyklischen Bearbeitung liest die CPU-Einheit zunächst die Signalzustände an allen physikalischen Prozesseingängen ab und bildet ein Prozessabbild der Eingänge. Das Automatisierungsprogramm wird weiter unter Einbeziehung interner Zähler, Merker und Zeiten schrittweise abgearbeitet und schließlich hinterlegt die CPU-Einheit die errechneten Signalzustände im Prozessabbild der Prozessausgänge, von welchem diese Signalzustände zu den physikalischen Prozessausgängen gelangen.

Der technische Prozess 12 umfasst eine Dosiereinrichtung mit einem Mischer 18, zumindest einem Silo 20 für in dem Mischer 18 zu kombinierende Ausgangsstoffe, eine Schnecke 22 oder dergleichen zum Abziehen der Ausgangsstoffe aus einem Silo 20 und zur Zuführung in den Mischer 18 und an allen vorgenannten Einrichtungen die entsprechende Sensorik und Aktorik zur automatischen Steuerung, also z. B. Füllstandssensoren für jedes Silo 20, Ventile am Ausgang eines Silos 20, einen in eine oder zwei Drehrichtungen betreibbaren Elektromotor zum Antrieb der Schnecke 22, einen Mischermotor zum Antrieb des Mischerflügels, Messwertaufnehmer im Mischer 18 zur Erfassung von Daten zur im Mischer 18 befindlichen Mischung, Ventile oder dergleichen zum gesteuerten Ablassen der Mischung aus dem Mischer 18, evtl. Heiz- oder Kühlaggregate für den Mischer 18, um die Mischung auf eine vorgegebene Temperatur zu bringen oder auf einer Solltemperatur zu halten, usw. Alle diese Komponenten sind an sich bekannt und aus Gründen der Übersichtlichkeit in FIG 1 nicht weiter dargestellt. Darüber hinaus ist für den exemplarisch gezeigten technischen Prozess 12 dargestellt, dass zu diesem auch eine Transporteinrichtung mit zumindest einem Transportband 24 gehört, mit welchem Behälter 26 unter dem Mischer 18 positioniert und nach Befüllung abtransportiert werden. Die Transporteinrichtung umfasst dabei weitere, nicht dargestellte Einheiten, z. B. einen Elektromotor zum Antrieb des Transportbands 24, Endschalter, also z. B. Lichtschranken oder dergleichen, zur Erfassung einzelner Positionen der Behälter 26 beim Betrieb des Transportbands 24, Füllstandssensoren zur Erfassung von aus dem Mischer 18 abgezogener Mischung in einem Behälter 26 usw. Auch alle diese Sensoren und Aktoren sind an sich bekannt und sind entsprechend in FIG 1 aus Gründen der Übersichtlichkeit nicht gezeigt.

Die Automatisierungsgeräte 14 sind den einzelnen Bestandteilen des technischen Prozesses 12 zugeordnet. Zum Beispiel steuert ein Automatisierungsgerät 14 den Mischvorgang im Mischer 18 und ist entsprechend dem Mischer 18 zugeordnet. Ein anderes Automatisierungsgerät 14 steuert die Transporteinrichtung und ist entsprechend dem Transportband 24 zugeordnet. Weitere Automatisierungsgeräte 14 sind den Silos 20 z. B. zur dortigen Messwerterfassung und zur Steuerung von Abzug von Material aus jeweils einem Silo 20 bzw. der Schnecke 22 zur Aktivierung der Schnecke 22 und zur Drehrichtungssteuerung der Schnecke 22 zugeordnet.

FIG 2 zeigt schematisch vereinfacht ein einzelnes Automatisierungsgerät 14. Dieses umfasst in an sich bekannter Art und Weise eine Verarbeitungseinheit 28 nach Art eines Mikroprozessors oder dergleichen und einen Speicher 30. Im Speicher 30 ist in ebenfalls an sich bekannter Art und Weise ein Automatisierungsprogramm 32 mit Programmcodeanweisungen zur Implementierung der jeweiligen Steuerungs- und/oder Überwachungsfunktionalität abgelegt. Das Automatisierungsprogramm 32 wird im Betrieb des Automatisierungssystems 10 (FIG 1) durch die Verarbeitungseinheit 28 des jeweiligen Automatisierungsgeräts 14 ausgeführt.

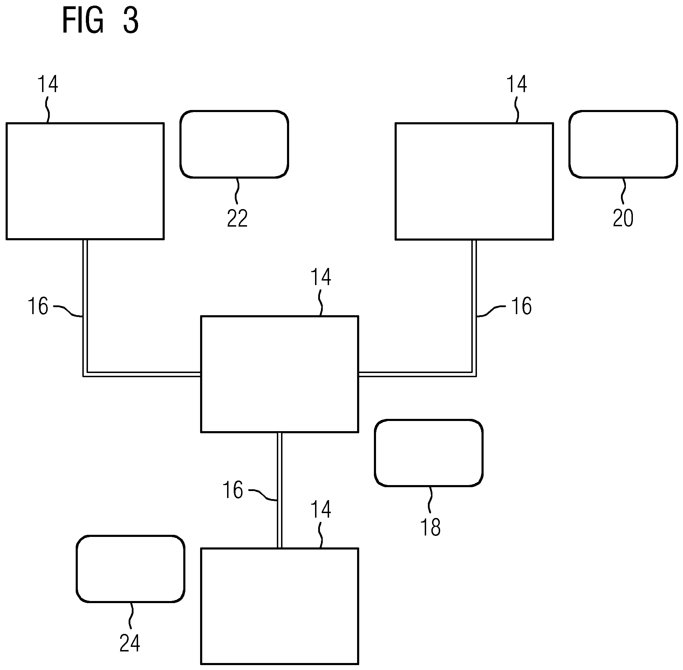

FIG 3 zeigt eine andere, nochmals schematisch vereinfachte Darstellung der Verhältnisse aus FIG 1. Gezeigt sind die über den Bus 16 kommunikativ verbundenen Automatisierungsgeräte 14 und jedem Automatisierungsgerät 14 zugeordnet ein Teilprozess des technischen Prozesses 12, also z. B. dem im Zentrum dargestellten Automatisierungsgerät 14 der Mischprozess mit dem Mischer 18, und weiteren Automatisierungsgeräten 14 entsprechend die Teilprozesse mit den Silos 20, der Schnecke 22 und dem Transportband 24.

Die Darstellung in FIG 3 versucht vor allem zu zeigen, dass hinsichtlich des Automatisierungssystems 10 (FIG 1), speziell hinsichtlich des technischen Prozesses 12 (FIG 1), eine hierarchische Ordnung besteht. Wenngleich sich die Darstellung auch in FIG 3 noch an dem exemplarischen technischen Prozess aus FIG 1 orientiert, ist dennoch klar, dass sich jeder technische Prozess 12 und damit jedes für dessen Automatisierung vorgesehenes Automatisierungssystem 10 durch eine solche hierarchische Struktur auszeichnet.

Bei bekannten Automatisierungslösungen ist es üblich, im Automatisierungssystem 10 zumindest ein zumindest auch als Bedien- und Beobachtungsgerät fungierendes Automatisierungsgerät vorzusehen. Häufig sind spezielle Automatisierungsgeräte 14 vom Automatisierungssystem 10 umfasst, die nur als Bedien- und Beobachtungsgeräte fungieren und einem Bediener einen Eingriff in die Steuerung und/oder Überwachung des technischen Prozesses 12 erlauben. Dazu werden z. B. Zustandsinformationen dargestellt. Ausgehend von dem in FIG 1 gezeigten technischen Prozess 12 kommt z. B. in Betracht, dass Füllstandsmengen von in den Silos 20 vorgehaltenem Material angezeigt werden, ggf. auch Temperaturen oder sonstige für den technischen Prozess 12 relevante Parameter. Darüber hinaus wird es bei dem dargestellten technischen Prozess 12 sinnvoll sein, auch Zustandsinformationen hinsichtlich des Mischprozesses darzustellen, also z. B. eine Temperatur des Mischguts; ggf. kommt auch noch eine Anzeige einer Drehzahl des Mischers in Betracht usw. Solche Darstellungen werden bislang zentral bei der Erstellung der Automatisierungslösung projektiert und es ergibt sich ein auf dem jeweiligen Automatisierungsgerät 14 oder Bedien- und Beobachtungsgerät ablaufendes Bedien- und Beobachtungsprogramm; das Bedienpersonal, das den technischen Prozess 12 und das Automatisierungssystem 10 überwacht, wird mit den dafür notwendigen Informationen versorgt. Zusätzlich kann auch noch eine Einflussmöglichkeit auf den technischen Prozess 12 und/oder das Automatisierungs system 10 vorgesehen sein, etwa derart, dass über das Bedien- und Beobachtungsprogramm durch Eingabe eines entsprechenden Sollwertes die Drehzahl des Mischermotors veränderbar ist, usw.

Für weitergehende diagnostische Zwecke werden gemäß der Erkenntnis der Erfindung für schnelle und sichere Eingriffe in die Anlage Mittel benötigt, die eine hohe Verfügbarkeit gewährleisten und zugleich ein technologisches, an der technischen Ausrüstung des Gesamtsystems orientiertes Bedienmodell anbieten. Dieses technologieorientierte Bedienmodell soll dabei auch während des Betriebs des Gesamtsystems nutzbar sein. Gerade für Situationen, bei denen ein Wartungstechniker zu einer Anlage gerufen wird und weder er noch der Anlagenbetreiber in diesem Moment vor Ort in der Anlage über aktuelle, technologieorientierte Anlagenbeschreibungsdaten verfügt, wird eine Lösung benötigt.

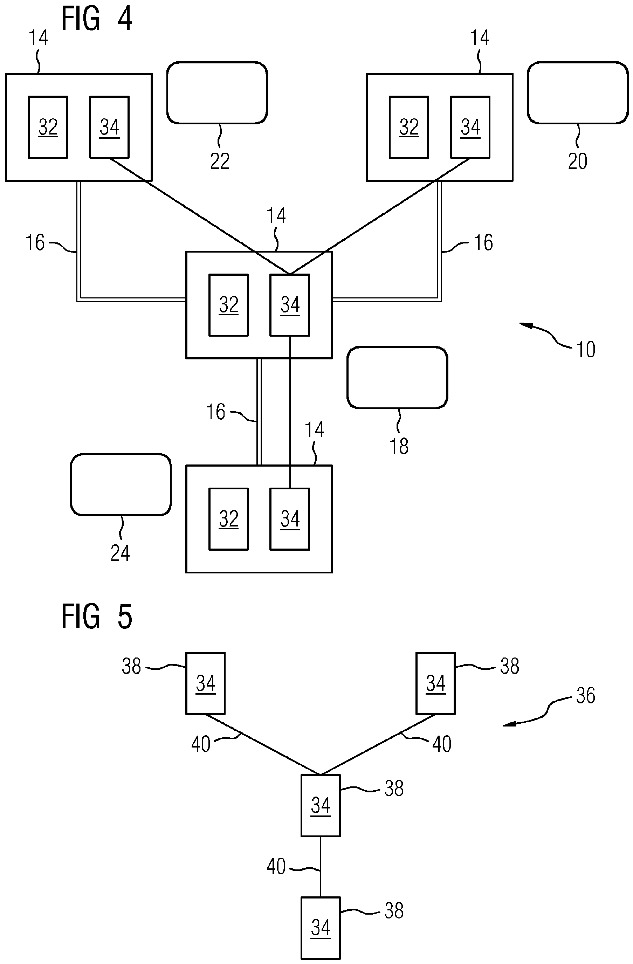

FIG 4 zeigt insoweit die Verhältnisse aus FIG 3 mit weiteren Details. Dargestellt ist für jedes Automatisierungsgerät 14, dass dieses in seinem Speicher 30 (FIG 2) das jeweilige Automatisierungsprogramm 32 zur Steuerung und/oder Überwachung des dem Automatisierungsgerät 14 zugeordneten Teilprozesses 18, 20, 22, 24 aufweist. Im gleichen Speicher 30 sind darüber hinaus technologieorientierte Anlagenbeschreibungsdaten 34 (im Folgenden kurz auch nur als Anlagenbeschreibungsdaten bezeichnet) vorgehalten. Die Anlagenbeschreibungsdaten 34 sind über das Automatisierungssystem 10 verteilt, also in mehreren Automatisierungsgeräten 14 gespeichert. Dabei besteht eine Verknüpfung der Anlagenbeschreibungsdaten 34 untereinander. Dazu ist vorgesehen, dass die Anlagenbeschreibungsdaten 34 insgesamt in einer hierarchischen Struktur organisiert sind, die im Folgenden als Objektbaum 36 (FIG 5) bezeichnet wird.

Der Objektbaum 36 ist in FIG 5 nochmals separat dargestellt. Dieser umfasst als Baumknoten 38 die Anlagenbeschreibungsdaten 34 oder zumindest Referenzen auf solche Anlagenbeschreibungsdaten 34. Zwischen den Baumknoten 38 bestehen Verbindungen, die im Folgenden entsprechend der allgemein üblichen Terminologie in der Graphentheorie als Kanten 40 bezeichnet werden. Bei der in den Figuren 4 und 5 dargestellten Situation verbinden die Kanten 40 jeweils Baumknoten 38 und die davon mittelbar oder unmittelbar umfassten Anlagenbeschreibungsdaten 34 über Automatisierungsgerätgrenzen hinweg, unter Einschluss der zwischen den Automatisierungsgeräten 14 bestehenden kommunikativen Verbindungen über den Bus 16. Genauso kann vorgesehen sein (nicht dargestellt), dass auf ein und demselben Automatisierungsgerät 14 mehrere Baumknoten 38 mit jeweils eigenen Anlagenbeschreibungsdaten 34 instanziiert sind und zwischen zumindest einzelnen auf ein und demselben Automatisierungsgerät 14 instanziierten Baumknoten 38 Verbindungen über Kanten 40 bestehen. Die Topologie eines solchen Objektbaums 36 kann grundsätzlich von einer trivialen Struktur mit einem Baumknoten 38 oder zumindest zwei Baumknoten und einer diese verbindenden Kante 40 bis hin zu einer komplexen Struktur mit über in einem Automatisierungssystem 10 verteilten Automatisierungsgeräten 14 und auf jedem Automatisierungsgerät 14 zumindest einem Baumknoten 38 mit zwischen diesen Baumknoten 38 in Form von Kanten 40 bestehenden Verbindungen reichen. Dabei kann - und darauf sei hier nur exemplarisch hingewiesen - auch die Situation bestehen, dass auf ein und demselben Automatisierungsgerät 14 mehrere Baumknoten 38 implementiert sind, während zwischen diesen Baumknoten keine direkten, über Kanten 40 realisierte Verbindungen bestehen und sich eine Einbindung solcher Baumknoten 38 in den Objektbaum 36 dadurch ergibt, dass diese Baumknoten 38 von Baumknoten 38 auf anderen Automatisierungsgeräten 14 referenziert werden. Solche Verknüpfungen werden durch Kanten 40 im Objektbaum 36 ausgedrückt, die neben dem referenzierten Baumknoten 38 auch das Automatisierungsgerät 14 bezeichnen, auf dem sich der in Bezug genommene Baumknoten 38 befindet. Dabei kann vorgesehen sein, dass jede Kante 40 ein Verknüpfungsziel grundsätzlich anhand des in Bezug genommenen Baumknotens 38 und anhand des Automatisierungsgerätes 14, auf dem sich dieser befindet, bezeichnet. Hinsichtlich der Bezeichnung des Automatisierungsgerätes 14 kann dann vorgesehen sein, dass bei einer Kante, die im Objektbaum 36 das jeweilige Automatisierungsgerät 14 nicht verlässt, ein Wert zur Bezeichnung des Automatisierungsgerätes 14 erlaubt ist, der implizit das jeweils momentane Automatisierungsgerät 14 bezeichnet.

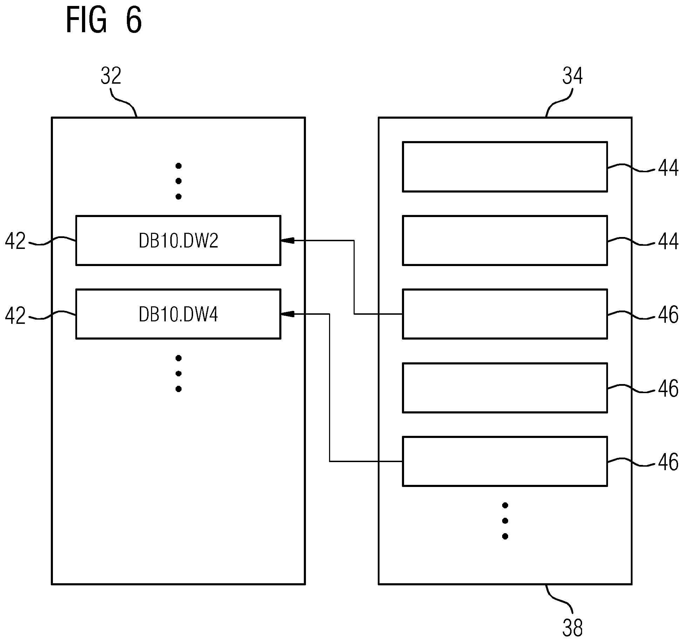

Bei der Darstellung in FIG 4 ist bereits eine Situation gezeigt, bei der die technologieorientierten Anlagenbeschreibungsdaten 34 unabhängig von den Automatisierungsprogrammen 32 im Automatisierungssystem 10 gespeichert sind. Die Anlagenbeschreibungsdaten 34 sind in dem Objektbaum 36 auch mit Knoten 38 und Kanten 40 organisiert. Nicht dargestellt ist bisher, dass die Anlagenbeschreibungsdaten 34 Referenzen zu den von den einzelnen Automatisierungsprogrammen 32 be- oder verarbeiteten Daten umfassen. Dies ist schematisch vereinfacht in FIG 6 gezeigt. Dort ist auf der linken Seite das Automatisierungsprogramm 32 dargestellt. Dieses umfasst in an sich bekannter Art und Weise einen Datenteil und einen Teil mit Programmcodeanweisungen zur Be- und Verarbeitung der Daten. Der Programmteil ist nicht separat dargestellt. Für den Datenteil ist separat dargestellt, dass für jedes Datum im Speicher 30 (FIG 2) des jeweiligen Automatisierungsgerätes 14 ein Speicherbereich belegt wird, so dass durch Zugriff auf den Inhalt dieses Speicherbereichs die Bearbeitung des dort hinterlegten Datums möglich ist. Als Beispiel für zwei in einem Automatisierungsprogramm 32 verwendbare Variablen sind die Datenworte zwei und vier (Datenwort = DW) gezeigt, die jeweils einem so genannten Datenbaustein (Datenbaustein = DB) mit der Ordnungsnummer zehn zugeordnet sind. Der in FIG 6 dargestellte Text stellt eine symbolische Bezeichnung der jeweiligen Variable und der davon belegten Speicheradresse dar. Die in der Zeichnung verwendeten symbolischen Bezeichner sind "DB10.DW2" und "DB10.DW4". Bei diesen Daten handelt es sich um Programmdaten 42 gemäß der hier und nachfolgend verwendeten Terminologie. Auf diese Programmdaten 42 ist für eine technologieorientierte Anlagenbeschreibung ein Zugriff möglich. Dazu ist vorgesehen, dass die Anlagenbeschreibungsdaten 34 (in FIG 6 auf der rechten Seite dargestellt) neben einer Mehrzahl von z. B. statischen Daten 44 auch Referenzen 46 zu Programmdaten 42 in einzelnen Automatisierungsprogrammen 32 umfassen. Eine solche Referenz 46 bedeutet, dass in den Anlagenbeschreibungsdaten 34 eine Adressinformation der referenzierten Programmdaten 42 enthalten ist. Eine Alternative besteht darin, dass als Referenz 46 in den Anlagenbeschreibungsdaten 34 ein symbolischer Bezeichner, also z. B. "DB10.DW2", aufgenommen ist, wobei die Speicheradresse des für diesen symbolischen Bezeichner angelegten Speicherbereichs mit üblichen Mitteln ermittelbar ist, z. B. unter Verwendung einer so genannten Kreuzreferenztabelle oder einer so genannten Look-up-table (LUT); sämtlich nicht dargestellt.

Statische Daten 44 kodieren als technologieorientierte Anlagenbeschreibungsdaten z. B., dass der technische Prozess 12 eine Mischeinrichtung umfasst oder dass zu der Mischeinrichtung ein Mischer 18 mit einem durch einen Elektromotor angetriebenen Mischerflügel gehört, usw.

Die Figuren 4 und 6 zeigen insoweit auch, dass Knoten 38 des Objektbaums 36 mit Anlagenbeschreibungsdaten 34 und davon umfassten Referenzen 46 zu Programmdaten 42 auf oder zumindest auch auf demjenigen Automatisierungsgerät 14 gespeichert werden, das die jeweiligen Programmdaten 42 bereitstellt.

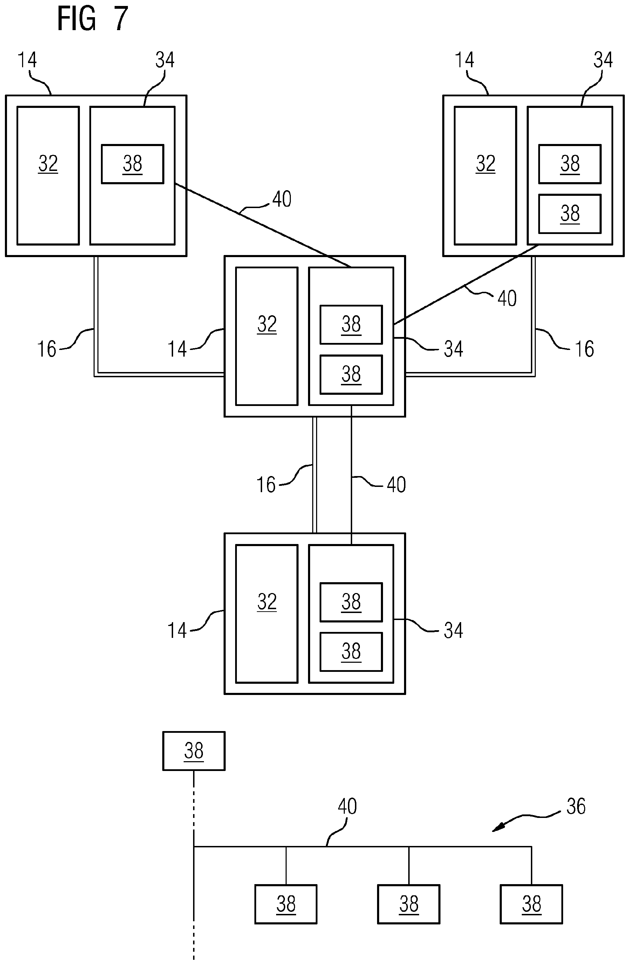

FIG 7 greift nochmals die Darstellung aus FIG 4 auf, wobei aus Gründen der Übersichtlichkeit auf die bereits in FIG 4 nur schematisch erfolgte Darstellung der Elemente des technischen Prozesses 12 verzichtet ist. Insoweit wird auf FIG 4 verwiesen. FIG 7 soll die Vielfalt der grundsätzlichen Möglichkeiten bei der Organisation des Objektbaums 36 (vgl. FIG 5) darstellen. FIG 7 zeigt, genau wie FIG 4, jedem Automatisierungsgerät 14 als Anlagenbeschreibungsdaten 34 zugeordnete Elemente des Objektbaums 36. Anders als in FIG 4 ist in FIG 7 jetzt zusätzlich dargestellt, dass als Elemente des Objektbaums 36 die Anlagenbeschreibungsdaten 34 ein oder mehrere Baumknoten 38 umfassen können. Jeder Baumknoten 38 umfasst dabei Anlagenbeschreibungsdaten 34 einer speziellen technologischen Kategorie. Zum Beispiel weist bei dem in FIG 1 dargestellten technischen Prozess 12 zumindest der Teilprozess mit dem Mischer 18, sodann der Teilprozess mit der Schnecke 22 und schließlich der Teilprozess mit dem Transportband 24 einen Elektromotor auf. Ein Elektromotor ist ein technologisches Objekt, das in einer technologieorientierten Anlagenbeschreibung normalerweise Berücksichtigung findet. Zur Beschreibung eines solchen Objektes kommen unterschiedliche Daten in Betracht, z. B. statische Daten 44, wie Position, Typ, Leistung usw. Darüber hinaus kommen auch dynamische Daten in Betracht, wie z. B. eine Statusinformation dahin gehend, ob der Motor läuft oder derzeit ausgeschaltet ist. Evtl. kommen zusätzlich noch eine Statusinformation hinsichtlich einer momentanen Drehzahl oder statische oder variable Informationen in Bezug auf Grenzwerte für eine solche Drehzahl in Betracht.

Anhand dieses Beispiels, das grundsätzlich auf jedes andere technologische Objekt oder Gruppen technologischer Objekte übertragbar ist, wird leicht vorstellbar, dass auf jedem Automatisierungsgerät 14, das mit seinem Automatisierungsprogramm 32 z. B. einen Elektromotor steuert, ein Baumknoten 38 mit Anlagenbeschreibungsdaten 34 für einen solchen Elektromotor abgelegt ist. Die Anlagenbeschreibungsdaten 34 solcher Baumknoten 38 erlauben hinsichtlich ihrer dynamischen Bestandteile über eine Referenz 46 (FIG 6) einen Zugriff auf Programmdaten 42 im jeweiligen Automatisierungsprogramm.

Im resultierenden Objektbaum 36 - und dies zeigt der untere Abschnitt der Darstellung in FIG 7 - ergibt sich dann durch die einzelne Baumknoten 38 verbindenden Kanten 40 eine geeignete technologische Gruppierung, so dass z. B. die nach dem gewählten Beispiel drei Baumknoten 38, die zur Repräsentation der Elektromotoren des technischen Prozesses 12 vorgesehen sind, im Objektbaum in einer gemeinsamen Hierarchieebene angeordnet sind, so dass beim Zugriff auf den Objektbaum 36 im Sinne einer technologieorientierten Anlagenbeschreibung eine gleichzeitige oder zumindest als zusammengehörig gekennzeichnete Anzeige sämtlicher Elektromotoren und der diesen zugeordneten Daten möglich ist. Dieses Beispiel lässt sich auf alle anderen technologischen Objekte des dargestellten Prozesses 12 übertragen, z. B. Ventile oder Ventilgruppen, die im dargestellten Beispiel zumindest an den Silos 20 und am Mischer 18 als notwendig angenommen werden können. Weitere Beispiele sind Endschalter, Grenzwertmelder usw., wobei zumindest bei den Silos 20 und beim Mischer 18 ein oder mehrere Füllstandswächter in Betracht kommen, um z. B. ein minimales und/oder maximales Füllstandsniveau überwachen und melden zu können, usw.

Die Strukturierung der Anlagenbeschreibungsdaten 34 wird grundsätzlich von einem Projektierer bei Erstellung der Automatisierungslösung für das Automatisierungssystem 10 und den jeweiligen technischen Prozess 12 festgelegt. Dies legt auch die Art und die Granularität der Anlagenbeschreibungsdaten 34 und der dafür notwendigen Baumknoten 38 fest. Sobald die notwendigen Baumknoten 38 festgelegt sind, kann die zwischen diesen notwendige Verbindung projektiert werden, indem dafür in dem Objektbaum 36 Kanten 40 zwischen den einzelnen Baumknoten 38 vorgesehen werden.

Eine solche technologieorientierte Beschreibung eröffnet für den Verwender die Möglichkeit, beim Zugriff auf zumindest eines der Automatisierungsgeräte 14 auch Zugriff auf die dort als Bestandteil des Objektbaums 36 hinterlegten Anlagenbeschreibungsdaten 34 zu erhalten. Mit dem Zugriff auf die Anlagenbeschreibungsdaten 34 wird unmittelbar ein technologieorientierter Zugriff auf die von diesem Automatisierungsgerät 14 gesteuerten und/oder überwachten Funktionalitäten möglich, denn wenn das jeweilige Automatisierungsgerät 14 z. B. einen Elektromotor ansteuert, wird gemäß der oben erwähnten Projektierung normalerweise für diesen Elektromotor ein Anlagenbeschreibungsdaten 34 umfassender Baumknoten 38 des Objektbaums 36 vorgesehen sein. Dadurch, dass von dem Baumknoten 38 bei einem nichttrivialen Objektbaum 36 zumindest eine Kante 40 zu einem weiteren Baumknoten 38 führen wird, ist eine Möglichkeit eines vollständigen oder teilweisen Traversierens des Objektbaums 36 gegeben, so dass ausgehend von einem zunächst in Zugriff genommenen Baumknoten 38 auch ein Zugriff auf mit diesem über mindestens eine Kante 40 verbundene weitere Baumknoten 38 möglich ist. Ein solcher Zugriff auf mehrere Baumknoten 38 erlaubt einen zusätzlichen Überblick über den technischen Prozess 12 aus Anlagenbeschreibungssicht und wenn der erste Zugriff auf einen Baumknoten 38 sich z. B. auf einen der vom technischen Prozess 12 umfassten Elektromotoren bezogen hat, wird durch Zugriff auf weitere mit diesem ersten Baumknoten 38 direkt oder indirekt verbundene Baumknoten 38 ein Zugriff auf sämtliche Anlagenbeschreibungsdaten 34, die sich auf Elektromotoren beziehen, möglich. Dieses Traversieren des Objektbaums 36 kann fortgesetzt werden, bis schließlich alle Baumknoten 38 des Objektbaums 36 erreicht sind, so dass ausgehend von einem Zugriff auf einen Baumknoten 38 bei einem beliebigen Automatisierungsgerät 14, also an einer beliebigen Stelle des Automatisierungssystems 10 bzw. an einer beliebigen Stelle des Objektbaums 36, ein Zugriff auf eine vollständige Anlagenbeschreibung möglich ist, wobei die Struktur der Anlagenbeschreibung gemäß dem Objektbaum 36 erhalten bleibt, so dass im Ergebnis eine technologieorientierte Anlagenbeschreibung für den Verwender des Verfahrens zur Verfügung steht.

Damit kann der Verwender z. B. alle Elektromotoren oder insgesamt alle elektrischen Antriebsaggregate ausschalten, alle Ventile schließen usw. Ein anderes Anwendungsszenario besteht darin, dass der Status sämtlicher Grenzwertmelder angezeigt wird, so dass z. B. bei einem Zugriff bei dem den Mischer 18 steuernden Automatisierungsgerät 14 über die technologieorientierte Anlagenbeschreibung ohne weiteres auch ein Zugriff auf Statusinformationen von Grenzwertwächtern möglich ist, die den Silos 20 zugeordnet sind. Im Gegensatz dazu haben herkömmliche Bedien- und Beobachtungsgeräte Einschränkungen, weil sie nicht unbedingt vollständig bezüglich der statischen Anlagenbeschreibungsdaten und der Signalflüsse sind, die Bildhierarchie nicht unbedingt der Anlagenhierarchie entspricht und vor allem vor Ort in der Anlage nicht verfügbar sind, weil sie entfernt in einer Bedienstation oder dergleichen stehen. Entsprechend würden dann die Füllstandsmesswerte der Silos 20 von einem Bedien- und Beobachtungsgerät visualisiert werden, das dem Automatisierungsgerät 14 zugeordnet ist, das die Silos 20 steuert. Diese beiden hier exemplarisch angenommenen Automatisierungsgeräte 14 müssen sich in einem technischen Prozess der in FIG 1 dargestellten Art allerdings nicht am gleichen Ort befinden, so dass bei einer Betrachtung der Visualisierung des Mischprozesses nicht ohne weiteres ersichtlich ist, ob evtl. hinsichtlich der Füllstandsüberwachung der Silos 20 eine Ausnahmesituation vorliegt. Der Zugriff auf die technologieorientierten Anlagenbeschreibungsdaten ermöglicht demgegenüber die gleichzeitige oder zumindest zusammengehörige Darstellung aller derartigen Daten, weil Füllstandswächter aus einer technologieorientierten Sicht als zusammengehörig angenommen werden.

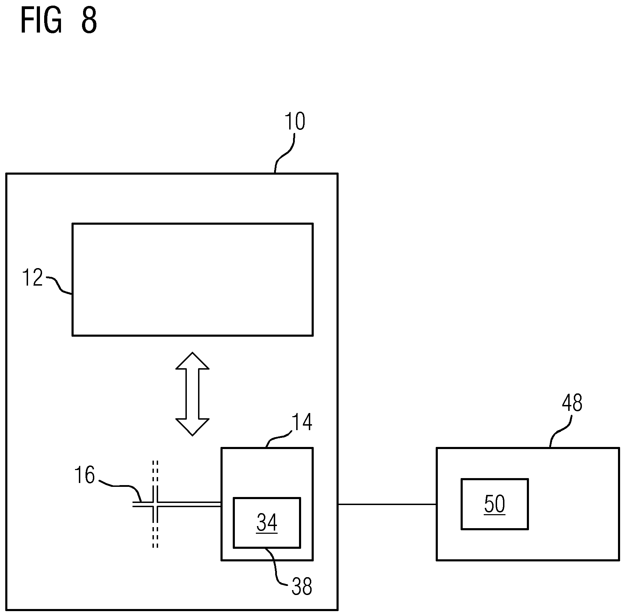

FIG 8 zeigt dazu schließlich ein an eines der Automatisierungsgeräte 14 des Automatisierungssystems 10 angeschlossenes spezielles Automatisierungsgerät, nämlich ein Bedien- und Beobachtungsgerät 48, mit dem ein Zugriff auf auf diesem Automatisierungsgerät 14 vorgehaltene Anlagenbeschreibungsdaten 34 und damit auf mindestens einen Baumknoten 38 des Objektbaums 36 der technologieorientierten Anlagenbeschreibung erfolgt. Durch vollständiges oder teilweises Traversieren des Objektbaums 36 kann mit einem auf dem Bedien- und Beobachtungsgerät 48 ablaufenden Bedien- und Beobachtungsprogramm 50 eine teilweise oder vollständige Anlagenbeschreibung des Automatisierungssystems 10 abgerufen werden oder diesem zur Verfügung gestellt werden, wobei mit dem Bedien- und Beobachtungsprogramm 50 durch Traversieren des Objektbaums 36 oder einer lokalen, in den Speicher des Bedien- und Beobachtungsgeräts 48 geladenen Kopie des Objektbaums 36 ein Zugriff auf einzelne Anlagenbeschreibungsdaten erfolgt. Das Bedien- und Beobachtungsprogramm 50 ist ein Beispiel für ein Computerprogramm mit Programmcodemitteln, um die im Zusammenhang mit einem Zugriff auf die Anlagenbeschreibungsdaten 34 erforderlichen Verfahrensschritte auszuführen. Das Bedien- und Beobachtungsprogramm 50 ist dabei grundsätzlich auch zur Ausführung aller hier beschriebenen Verfahrensschritte, die sich auf besondere Ausgestaltungen des Zugriffs auf die Anlagenbeschreibungsdaten 34 beziehen, vorgesehen.

Ein Computerprogramm, mit dem die Anlagenbeschreibungsdaten 34 und der Objektbaum 36 mit seinen Baumknoten 38 und dazwischen verlaufenden Kanten 40 projektiert und verteilt bei den einzelnen Automatisierungsgeräten 14 implementiert werden, ist nicht separat dargestellt. Ein solches Computerprogramm kann als Teilfunktionalität eines Engineeringsystems vorgesehen sein und wird entsprechend auf einem Programmiergerät ausgeführt, mit dem eine Automatisierungslösung für einen konkreten technischen Prozess 12 und eine sich daraus ergebende Automatisierungsaufgabe erstellt werden.

Einzelne im Vordergrund stehende Aspekte der hier eingereichten Beschreibung lassen sich damit kurz wie folgt zusammenfassen: Die Erfindung betrifft ein Verfahren zum Betrieb eines Automatisierungssystems 10 mit Automatisierungsgeräten 14, ein Computerprogramm zur Implementierung des Verfahrens und ein Computersystem mit einem solchen Computerprogramm, wobei technologieorientierte Anlagenbeschreibungsdaten 34 im Automatisierungssystem 10 gespeichert werden, insbesondere verteilt gespeichert werden, wobei die Anlagenbeschreibungsdaten 34 in einem Objektbaum 36 mit Knoten 38 und Kanten 40 organisiert sind, wobei die Anlagenbeschreibungsdaten 34 Referenzen 46 zu Programmdaten 42 in einzelnen Automatisierungsprogrammen 32 umfassen und wobei Knoten 38 des Objektbaums 36 mit Referenzen 46 zu Programmdaten 32 auf oder zumindest auch auf demjenigen Automatisierungsgerät 14 gespeichert werden, das die jeweiligen Programmdaten 42 bereitstellt.

## Patentansprüche

1. Verfahren zum Betrieb eines Automatisierungssystems (10) mit einer Mehrzahl von Automatisierungsgeräten (14) und einer Mehrzahl von auf den Automatisierungsgeräten (14) ablaufenden Automatisierungsprogrammen (32) zur Steuerung und/oder Überwachung eines technischen Prozesses (12),
wobei technologieorientierte Anlagenbeschreibungsdaten (34) unabhängig von den Automatisierungsprogrammen (32) verteilt im Automatisierungssystem (10) und in mehreren Automatisierungsgeräten (14) gespeichert werden,
wobei die Anlagenbeschreibungsdaten (34) in einem Objektbaum (36) mit Knoten (38) und Kanten (40) organisiert sind,
wobei die Anlagenbeschreibungsdaten (34) Referenzen (46) zu Programmdaten (42) in einzelnen Automatisierungsprogrammen (32) umfassen und
wobei Knoten (38) des Objektbaums (36) mit Referenzen (46) zu Programmdaten (42) auf oder zumindest auch auf demjenigen Automatisierungsgerät (14) gespeichert werden, das die jeweiligen Programmdaten (42) bereitstellt.

2. Verfahren nach Anspruch 1, wobei die Anlagenbeschreibungsdaten (34) als Referenzen (46) zu Programmdaten (42) in einzelnen Automatisierungsprogrammen (32) Adressinformation oder im jeweiligen Automatisierungsprogramm (32) verwendete symbolische Bezeichner umfassen.

3. Verfahren nach Anspruch 1 oder 2, wobei jeder Knoten (38) des Objektbaums (36) Referenzen zu benachbarten Knoten (38) des Objektbaums (36) umfasst, wobei eine solche Referenz eine Kante (40) in dem Objektbaum (36) darstellt.

4. Verfahren nach Anspruch 3,
wobei die Automatisierungsgeräte (14) über einen physikalischen Bus (16) kommunikativ verbunden sind und
wobei sich ausgehend von einem ersten Automatisierungsgerät (14) als Speicherort eines referenzierenden Knotens (38) die Referenzen (46) auch auf mit diesem ersten Automatisierungsgerät (14) nur über den Bus (16) verbundene Automatisierungsgeräte (14) und dortige Knoten (38) des Objektbaums (36) beziehen.

5. Verfahren nach Anspruch 4, wobei ausgehend von einem Zugriff auf einen beliebigen Knoten (38) des Objektbaums (36) alle weiteren Knoten (38) des Objektbaums (36) unmittelbar oder zumindest mittelbar erreichbar sind.

6. Verfahren nach Anspruch 5, wobei ausgehend von einem Zugriff auf einen beliebigen Knoten (38) des Objektbaums (36) durch Traversieren des Objektbaums (36) eine teilweise oder vollständige Anlagenbeschreibung des Automatisierungssystems (10) generiert wird.

7. Verfahren nach Anspruch 6, wobei die teilweise oder vollständige Anlagenbeschreibung des Automatisierungssystems (10) mit einem Bedien- und Beobachtungsprogramm (50) abgerufen wird oder diesem zur Verfügung gestellt wird und wobei mit dem Bedien- und Beobachtungsprogramm (50) durch Traversieren des Objektbaums (36) ein Zugriff auf einzelne Anlagenbeschreibungsdaten (34) erfolgt.

8. Computerprogramm mit Programmcodemitteln zur Ausführung eines Verfahrens gemäß einem der Ansprüche 1 bis 7.

9. Datenträger mit einem Computerprogramm nach Anspruch 8.

10. Computersystem, auf dem ein Computerprogramm nach Anspruch 8 geladen ist.

## Claims

1. Method for operating an automation system (10) having a plurality of automation units (14) and a plurality of automation programs (32) which run on the automation units (14) and are intended to control and/or monitor a technical process (12),
technology-oriented plant description data (34) being stored independently of the automation programs (32) in a distributed manner in the automation system (10) and in a plurality of automation units (14),
the plant description data (34) being organized in an object tree (36) with nodes (38) and edges (40),
the plant description data (34) comprising references (46) to program data (42) in individual automation programs (32), and nodes (38) of the object tree (36) containing references (46) to program data (32) being stored in or at least also in that automation unit (14) which provides the respective program data (42).

2. Method according to Claim 1, the plant description data (34) comprising, as references (46) to program data (42) in individual automation programs (32), address information or symbolic identifiers used in the respective automation program (32).

3. Method according to Claim 1 or 2, each node (38) of the object tree (36) comprising references to adjacent nodes (38) of the object tree (36), such a reference representing an edge (40) in the object tree (36).

4. Method according to Claim 3,
the automation units (14) being communicatively connected via a physical bus (16), and
starting from a first automation unit (14) as the storage location of a referencing node (38), the references (46) also relating to automation units (14) connected to this first automation unit (14) only via the bus (16) and to nodes (38) of the object tree (36) there.

5. Method according to Claim 4, all further nodes (38) of the object tree (36) being able to be reached directly or at least indirectly starting from access to any desired node (38) of the object tree (36).

6. Method according to Claim 5, a partial or complete plant description of the automation system (10) being generated by traversing the object tree (36) starting from access to any desired node (38) of the object tree (36).

7. Method according to Claim 6, the partial or complete plant description of the automation system (10) being retrieved using an operating and observation program (50) or being made available to the latter, and individual plant description data items (34) being accessed using the operating and observation program (50) by traversing the object tree (36).

8. Computer program having program code means for carrying out a method according to one of Claims 1 to 7.

9. Data storage medium having a computer program according to Claim 8.

10. Computer system on which a computer program according to Claim 8 is loaded.

## Revendications

1. Procédé pour faire fonctionner un système ( 10 ) d'automatisation, ayant une pluralité d'appareils ( 14 ) d'automatisation et une pluralité de programmes ( 32 ) d'automatisation, se déroulant sur les appareils ( 14 ) d'automatisation, pour commander et contrôler un processus ( 12 ) technique,
dans lequel on répartit, indépendamment des programmes ( 32 ) d'automatisation, des données ( 34 ) de description d'installation concernant la technologie et on les mémorise dans le système ( 10 ) d'automatisation et dans plusieurs appareils ( 14 ) d'automatisation,
dans lequel les données ( 34 ) de description d'installation sont organisées dans un arbre ( 36 ) objet, ayant des noeuds ( 38 ) et des arcs ( 40 ), les données ( 34 ) de description d'installation comprenant des références ( 46 ) à des données ( 42 ) de programme dans des programmes ( 32 ) d'automatisation individuels et
dans lequel on mémorise des noeuds ( 38 ) de l'arbre ( 36 ) objet avec des références ( 46 ) à des données ( 42 ) de programme sur ou au moins également sur l'appareil ( 14 ) d'automatisation, qui met à disposition les données ( 42 ) de programme respectives.

2. Procédé suivant la revendication 1, dans lequel les données ( 34 ) de description d'installation comprennent comme références ( 46 ) aux données ( 42 ) de programme, dans des programmes ( 32 ) d'automatisation individuels, une information d'adresses ou des identificateurs symboliques utilisés dans le programme ( 32 ) d'automatisation respectif.

3. Procédé suivant la revendication 1 ou 2, dans lequel chaque noeud ( 38 ) de l'arbre ( 36 ) objet comprend des références à des noeuds ( 38 ) voisins de l'arbre ( 36 ) objet, une référence de ce genre représentant un arc ( 40 ) de l'arbre ( 36 ) objet.

4. Procédé suivant la revendication 3, dans lequel les appareils ( 14 ) d'automatisation sont reliés en communication par un bus ( 16 ) physique et dans lequel, en partant d'un premier appareil ( 14 ) d'automatisation comme emplacement de mémoire d'un noeud ( 38 ) de référence, les références ( 46 ) se rapportent aussi à des appareils ( 14 ) d'automatisation reliés à ce premier appareil ( 14 ) d'automatisation seulement par le bus ( 16 ) et à des noeuds ( 38 ), qui s'y trouvent, de l'arbre ( 36 ) objet.

5. Procédé suivant la revendication 4, dans lequel, en partant d'un accès à un noeud ( 38 ) quelconque de l'arbre ( 36 ) objet, tous les autres noeuds ( 38 ) de l'arbre ( 36 ) objet peuvent être atteints directement ou au moins indirectement.

6. Procédé suivant la revendication 5, dans lequel, en partant d'un accès à n'importe quel noeud ( 38 ) de l'arbre ( 36 ) objet, on peut, en traversant l'espace ( 36 ) objet, produire une description d'installation partielle ou complète du système ( 10 ) d'automatisation.

7. Procédé suivant la revendication 6, dans lequel on appelle, par un programme ( 50 ) de services et d'observations, ou on met à sa disposition la description d'installation partielle ou complète du système ( 10 ) d'automatisation et dans lequel il s'effectue, par le programme ( 50 ) de services et d'observations, en traversant l'arbre ( 36 ) objet, un accès à diverses données ( 34 ) de description d'installation.

8. Programme d'ordinateur ayant des moyens de code de programme pour effectuer un procédé suivant l'une des revendications 1 à 7.

9. Support de données ayant un programme d'ordinateur suivant la revendication 8.

10. Système d'ordinateur sur lequel est chargé un programme d'ordinateur suivant la revendication 8.
